# FASCICULE DE BREVET EUROPEEN

(11) **EP 2 733 097 B1**
(45) Date de publication et mention de la délivrance du brevet: **16.09.2015**
(21) Numéro de dépôt: 13005224.4
(22) Date de dépôt: 06.11.2013
(51) Int. Cl.: B65G 69/28

(54) **Pont adossé son procédé d'installation et utilisation**
Angebaute Brücke, ihr Montageverfahren und ihre Verwendung
Leaning bridge, method for installing same and use thereof

(30) Priorité: 16.11.2012 FR 1203088
(43) Date de publication de la demande: 21.05.2014
(73) Titulaire: EXPRESSO France SAS, 67319 Wasselonne (FR)
(72) Inventeur: Valentin, Guy, 67319 Wasselonne (FR)
(74) Mandataire: Munier, Laurent

(56) Documents cités:
- DE-A1- 3 310 278
- DE-U1- 9 401 242
- US-A- 3 665 537
- US-A1- 2012 011 664
- Anonymous: "Ponts de liaison sur châssis monobloc", Website , 8 mai 2011 (2011-05-08), XP002699769, Extrait de l'Internet: URL:www.expresso-france.com/p111b.php [extrait le 2013-06-27]

## Description

La présente invention concerne les dispositifs et installations de transbordement de cargaison, chargement ou déchargement de véhicules depuis un quai.

Le chargement de véhicule demande aux opérateurs et à la cargaison de pouvoir atteindre la hauteur du plateau du camion ou de la remorque.

Pour cela, il est utilisé des quais de transbordement.

Ces quais donnent naissance à plusieurs difficultés de part leur caractère statique et du mur au niveau de la chaussée. Il en résulte de nombreux problèmes techniques et des dangers pour le personnel, notamment le dénivelé entre le haut du quai et la chaussée ne peut pas être à la hauteur des différents véhicules camions et des remorques.

Selon les véhicules, la hauteur varie et le même véhicule varie lui-même en hauteur en s'affaissant sous le poids des chariots élévateurs qui embarquent dans le véhicule pour le transbordement.

En outre, il reste un espace entre le quai et le camion. Le passage pour le transbordement n'est pas possible. Les risques d'accidents sont de plusieurs sortes : risque d'écrasement entre le véhicule qui recule et le quai, risque de chute du quai.

Hors travail, ces risques sont atténués par des sas fermés par des portes de quais.

Pour éviter les travaux de génie civil à l'extérieur, l'état de la technique connaît les niveleurs de quais (voir brevet français n° 2 917 077 au nom de la demanderesse). Ces niveleurs sont avantageux car ils protègent les opérateurs des chutes par une barrière et de l'écrasement par un refuge au niveau du quai, mais ils présentent des limitations en demandant, de nombreuses pièces qui sont de plus volumineuses. Ces pièces imposent d'importants travaux de génie civil au niveau du quai. Ce qui complique l'installation.

D'autres problèmes sont apparus ; les intempéries (pluie, neige, verglas, etc...) gênent le transbordement voire l'empêchent.

Pour résoudre ces derniers problèmes, l'état de la technique connaît des ponts dits *autodocks*, mais les installations de ces dispositifs sont compliquées et lourdes. Ce qui fait que ces ponts dits *autodocks* sont longs à installer sur site. Les ponts dits *autodocks* sont des tunnels avec châssis qui présentent un sas en façade vers le camion. Les tunnels comprennent au moins quatre pieds, ce qui nécessite des travaux de génie civil compliqués pour l'installation dont la pose de plots de support pour au moins chaque pied du tunnel

**Le site Internet de la demanderesse (www.expresso-france.com/p1116.phe) est intéressant. Remis souvent à jour, il existait avant le dépôt de la présente demande en présentant un exemple de pont dit autodock.**

**Ces ponts exigent un équipement spécifique : sas d'entrée, porte, sas de sécurité.**

**Donc, la sécurité demande d'effectuer des travaux de génie civil importants.**

**Le site Internet présente différents produits dont un pont monobloc dit D1 ; ce pont monobloc présente des limitations.**

**Le dispositif selon l'invention vise la sécurité des manutentionnaires en formant un refuge au sol, une barrière antichute efficace pour le personnel sur le quai et un passage piéton qui est situé entre la position repos ou fermée et la position travail permettant le passage des chariots du quai au plateau du véhicule.**

**Il faut considérer que deux formes de portes de plateau de camion sont les plus répandues : les portes battantes et les portes rideaux.**

**La pratique enseigne que les routiers ouvrent les portes battantes avant d'accoster le quai, mais pas les portes rideaux.**

**Aussi, pour ouvrir les portes rideaux, les opérateurs avec les ponts connus appuient un pied sur le camion, gardent un pied dans le vide et ouvrent la porte rideau en prenant des risques de chutes, d'écrasement et de blessures.**

**Le dispositif selon l'invention vise à assurer la sécurité des opérateurs en conservant le refuge au sol connu de D1, en apportant une barrière antichute efficace. La barrière de D1 s'ouvre sous l'effet d'une pression, par exemple le poids d'un manutentionnaire.**

**Le document** US 3665537A **décrit un pont flottant pour charger les wagons de marchandises.**

**Bien que ce pont flottant ne prévoie pas de travaux de génie civil, il ne permet pas d'assurer la sécurité en matière de chargement de camions, car des wagons ferroviaires, la différence des camions et des remorques routières, sont maintenus par les rails et présentent des plateaux à niveau des quais.**

**Au contraire, le pont, selon l'invention, est universel et doit permettre le transbordement de véhicules routiers utilitaires à plateaux de hauteurs variables ; ceci en toute sécurité**

Dans le but de résoudre ces problèmes, l'invention qui se situe dans le domaine des ponts car le dispositif selon l'invention se place en façade de quai ; a pour premier objet un pont adossé. Tous les ponts adossés sont mobiles. Mais les ponts adossés connus sont amovibles et fixés dans un rail ; ce qui demande des travaux de génie civil.

Le pont adossé selon l'invention permet d'atteindre et d'améliorer les avantages des niveleurs avec une zone refuge anti écrasement accessible du sol et du quai.

Ce pont forme barrière antichute en position repos, permet en position travail d'avoir une surface de travail ou une surface de liaison avec le véhicule. Surtout, le pont adossé selon l'invention résout d'autres problèmes techniques en évitant les travaux de génie civil et en évitant les avancées à l'extérieur. Ainsi, il n'est pas perdu de mètre carré, ni dans le bâtiment, ni sur la chaussée. Car le pont, selon l'invention, tient dans le sas de quai de dimension standard, ce qui permet de rester à l'abri de la pluie et de la neige pendant le transbordement.

Ces résultats sont atteints grâce à un pont adossé basculant, selon la revendication 1, sous l'effet de vérin(s) électro hydraulique(s) ou pneumatique(s) comprenant au moins :
- une plateforme en tôle typiquement en tôle rectangulaire larmée,
- des jupes latéralisées en tôle,
- des renforts de plate forme en profilés pliés,
- une lèvre
- un châssis monobloc.

Le châssis monobloc comprend
- sur la surface extérieure, des butoirs intégrés disposés latéralement, un espace centrale formant refuge,
- sur la face intérieure tournée vers le quai une casquette en tôle avec retour fixé dans une saignée du quai et ancré par des chevilles,
- à l'intérieur une centrale hydraulique embarquée de commandes de vérins.

La plateforme est articulée sur le châssis, remontant sous l'effet pivotant du vérin en position quasi verticale de barrière de quai anti chute et descendant en position de travail, flottante et/ou fixe, est commandée par la centrale hydraulique.

**L'invention résout le problème des ouvertures involontaires de la barrière antichute formée car le pont en position repos par un dispositif hydraulique qui seul déploie ledit pont. Ainsi, les vérins empêchent le déploiement du pont sous l'effet d'un poids, par exemple de l'opérateur qui en tombant appuie dessus. De plus, la lèvre du dispositif, selon l'invention, permet par son déploiement ou son abaissement une position dite piéton pour déverrouiller en sécurité les portes du camion qui a accosté le quai portes fermées. De plus, la structure du dispositif selon l'invention a permis toujours sans travaux spécifiques de former un refuge au sol.**

**Dans le but d'inciter à installer un dispostif assurant la sécurité du personnel, l'**invention a également pour objet un procédé d'installation rapide d'un pont adossé.

Ce résultat atteint par un procédé d'installation d'un pont adossé conforme à celui décrit ci-dessus, sur le nez du quai comprend les étapes suivantes :
- fixation d'anneaux d'élingages vissés sur les deux caissons permettant la manutention ;
- manutention du pont jusqu'au quai ;
- pose pour prise de mesures au niveau du retour de la casquette ;
- retrait du pont ;
- création de la saignée sur le quai ;
- fixation par perçage et chevillage sur le quai ;
- finition par colle résine ;
- branchement électrique du coffret relié à la centrale.

La facilité d'installation est obtenue par le procédé selon l'invention car le pont adossé est prêt à être posé et les travaux de génie civil préalables à l'installation des ponts connus sont évités car le pont adossé selon l'invention est fixé sur le nez du quai et est placé devant le quai et présente une petite quantité de pièces ; ce qui lui permet de tenir dans un sas standard qui a une profondeur de 900 mm.

L'invention a encore pour objet une utilisation du pont adossé conforme à celui décrit ci-dessus en position intermédiaire, figée à l'horizontale pour la plateforme lèvre rentrée qui recouvre la zone refuge permettant à l'opérateur d'accéder sur la plateforme pour ouvrir le rideau du camion. Un voyant signale ladite position figée de la plateforme.

L'invention sera mieux comprise à la lecture des figures données à titre d'exemples, non limitatifs et sur lesquels :
- La Fig. 1 est une photographie vue de ¾ avant du pont adossé à lèvre télescopique selon l'invention plateforme levée.
- La Fig. 2 est une photographie vue de ¾ de côté du pont adossé selon la Fig. 1 plateforme abaissée figée et lèvre rentrée.
- La Fig. 3 est une photographie vue de la face du pont adossé selon la Fig. 2 dans la même position.
- La Fig. 4 est une photographie vue de face du pont adossé selon les Fig. précédentes, plateforme abaissée flottante descendant dans le châssis lèvre sortie.
- La Fig. 5 est une vue de face du pont adossé au repos selon les Fig. précédentes, plateforme relevée.
- La Fig. 6 est une vue d'arrière du pont adossé selon la Fig. 5.
- La Fig. 7 est une vue de gauche du pont adossé, plateforme relevée selon les Fig. 5 et 6.
- La Fig. 8 est une vue de ¾ avant du pont adossé selon l'invention plateforme abaissée fixe et lèvre rentrée.
- La Fig. 9 représente, vue de face, le coffret électrique du pont adossé selon l'invention.
- La Fig. 10 est une vue de face du pont adossé à lèvre basculante au repos.
- La Fig. 11 est une vue en coupe du pont adossé selon la Fig. précédente, plateforme abaissée en position intermédiaire figée.

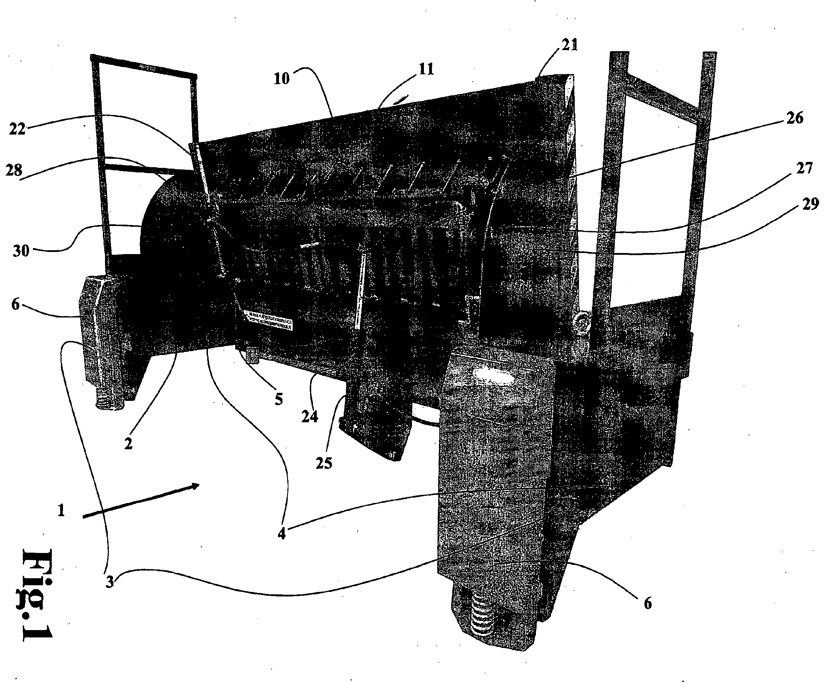

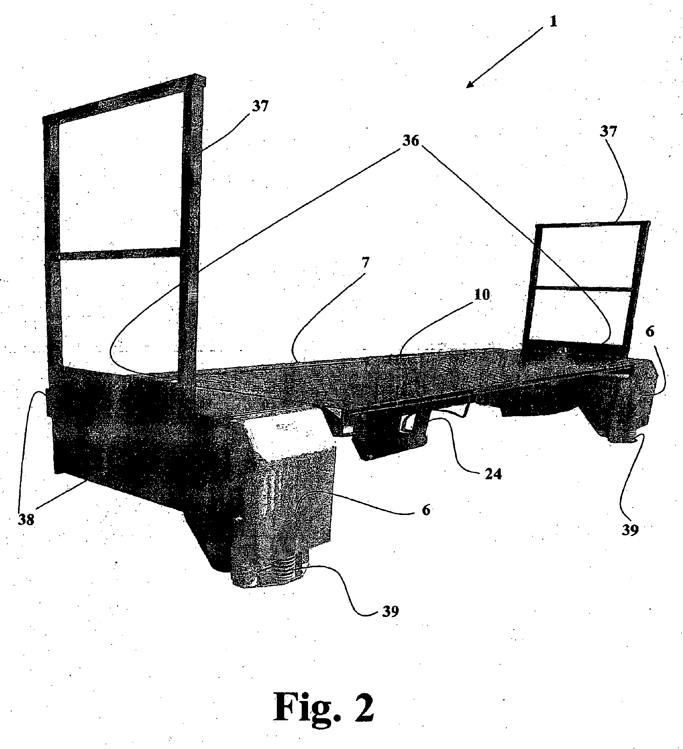

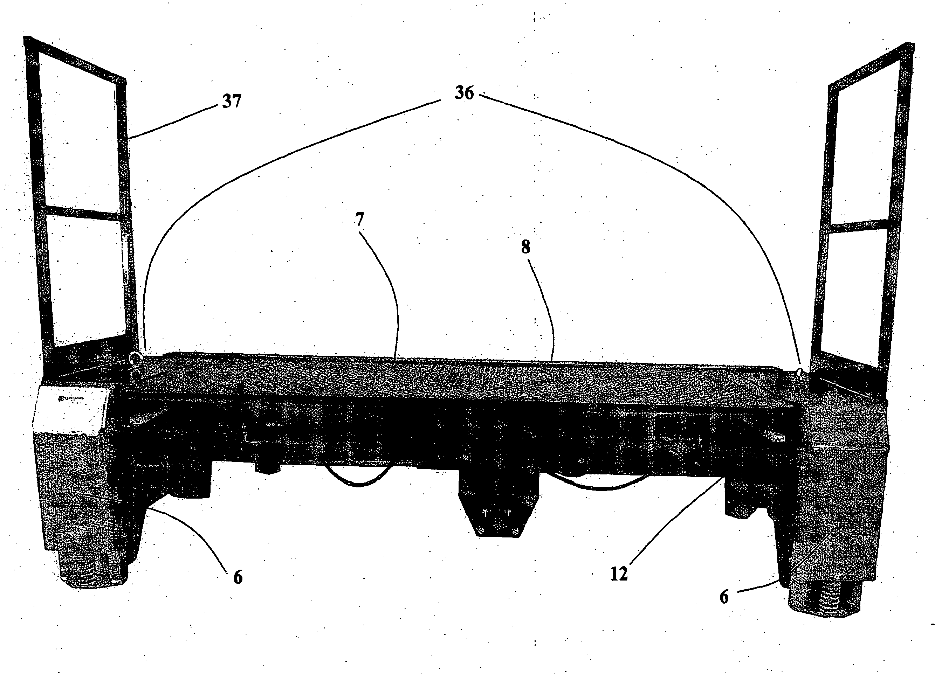

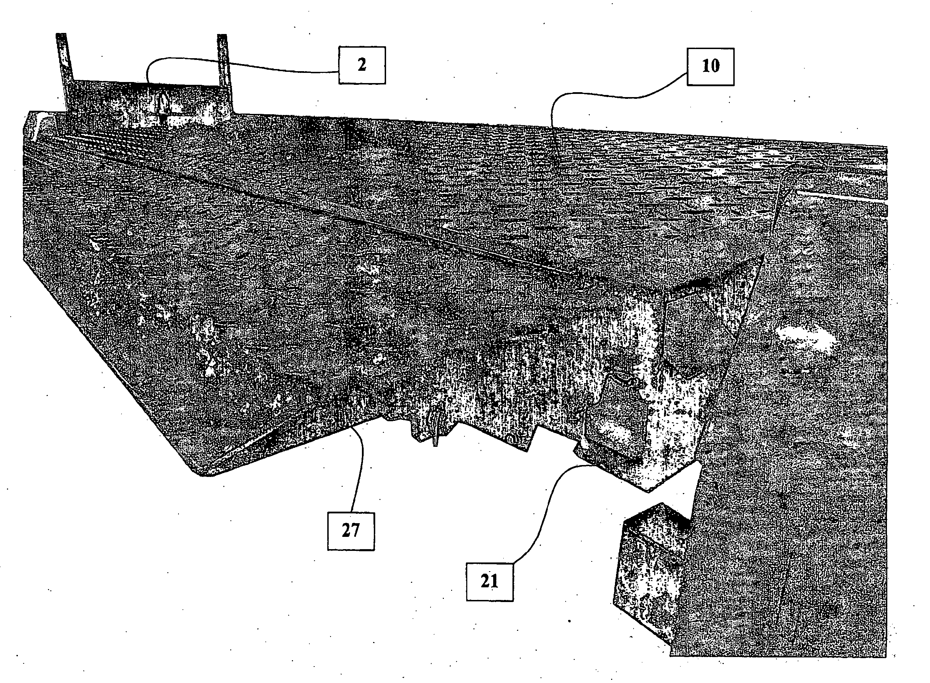

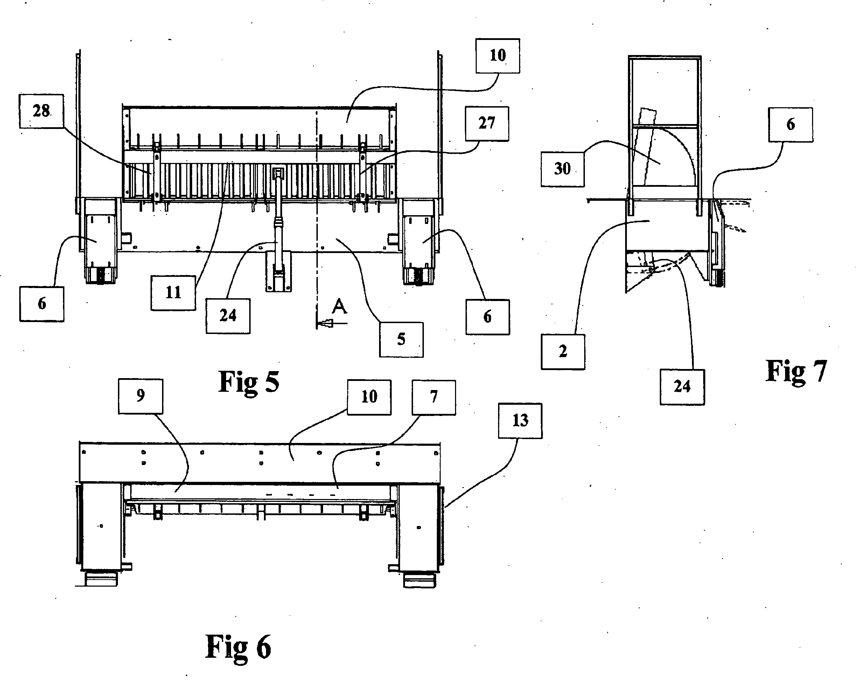

Le pont adossé 1 représenté sur les Fig. 1 à 8 comprend des composants de construction, des composants hydrauliques et des composants de sécurité.

Le pont adossé 1 comprend comme composants de construction un châssis monobloc 2 avec butoirs intégrés 3.

Le châssis comprend des caissons latéraux 4 reliés par un plastron 5, des butoirs d'accostages 6 sont fixés sur les caissons 4 dont l'ensemble caisson 4 butoirs d'accostages 6 forme butoirs 3. Une casquette 7 est fixée sur le plastron 5. La casquette 7 est une plaque de tôle 8 avec un retour d'extrémités 9 ; ainsi la casquette a la forme d'un L et le retour 9 permet un positionnement dans une saignée aménagée dans le quai.

Une plate forme rectangulaire 10 en tôle larmée est fixée pivotante par des charnières au châssis 2. La plate forme 10 est munie sur sa face inférieure des renforts en profilé pliés 11.

Les composants hydrauliques sont une centrale hydraulique embarquée 12 à savoir fixée dans un des caissons 4 qui lui sert de logement et de protection.

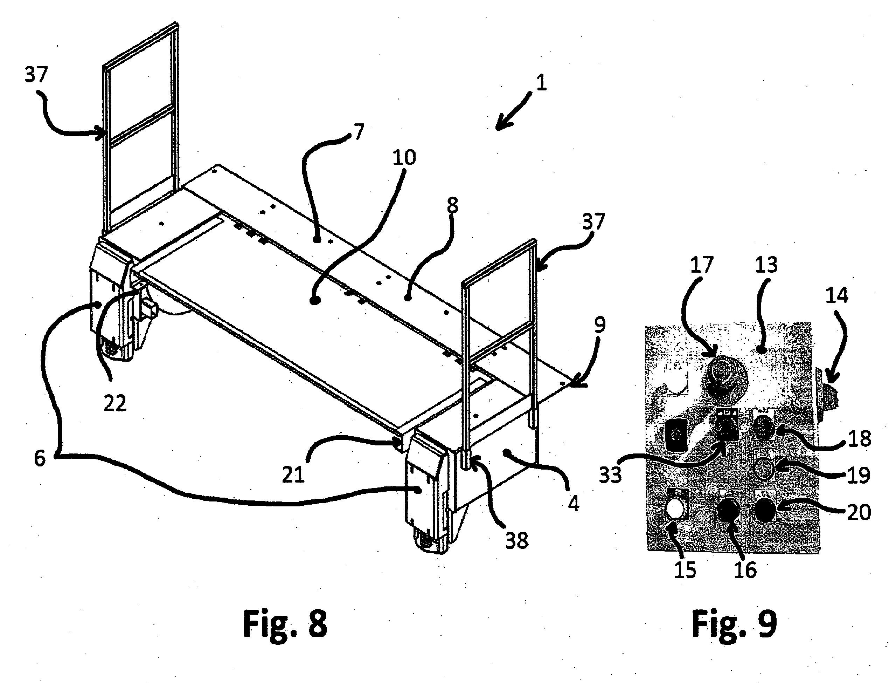

La centrale hydraulique 12 est reliée électriquement à un coffret électrique 13 représenté Fig 9. Le coffret électrique 13 comprend un moyen de protection du moteur par disjonction magnétique 14, un circuit de commande 15, un moyen de protection du circuit par fusible 16, un interrupteur général 17.

Dans les moyens de sécurité comme le système antichute, l'espace 32 entre les caissons 4 qui forme une zone refuge anti écrasement, le pont adossé 1 comprend aussi un dispositif d'arrêt d'urgence dit « coup de poing » 33 et un clapet parachute 34. Au repos, une béquille de maintenance 35 peut être placée sous la plateforme 10 pour empêcher la descente.

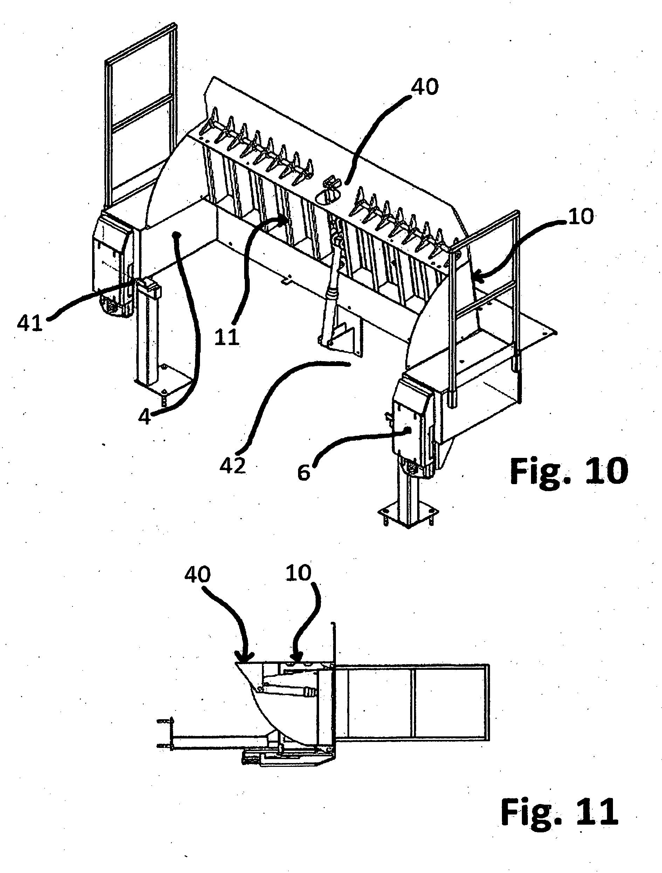

Dans une variante avantageuse, le pont adossé représentés sur les Fig. 10 et 11 diffère de celui représenté sur les figures précédentes en ce que la lèvre 40 est basculante. Les signes de référence correspondant aux mêmes éléments ont été conservés identiques sur les différentes figures. La lèvre 40 est repliée lorsqu'elle est en position intermédiaire. La lèvre 40 repose sur des taquets 41 permettant de supporter le poids d'un chariot élévateur dans les situations où ladite lèvre 40 ne peut être posée sur un camion chargé jusqu'au bord.

Le pont adossé selon l'invention présente de nombreux avantages, la lèvre 23, dans sa version télescopique à pour but l'ajustement de la longueur de sortie jusque sur le plateau du véhicule.

Le châssis est un ensemble mécano-soudé monobloc qui comprend deux caissons latéraux 4 servant de support aux butoirs d'accostages 6 et de butoirs et servant de logement et protection de la centrale hydraulique 12, les caissons 4 étant reliés par un plastron 5 support de la casquette 7 et des charnières d'articulation de la plate forme 10, avec ce faible nombre de pièces permet de tenir dans une emprise au sol réduite telle que 790 mm sur 2880 mm.

Pour éviter aux opérateurs de s'accrocher dans des protubérances ce qui est une source de chute, la casquette 7 comprend des perçages fraisés permettant de recevoir des chevilles à béton affleurantes.

Le procédé d'installation d'un pont adossé 1 selon l'invention comprend préalablement au transport et à la manutention une étape d'assemblage d'au moins les composants suivants, la plateforme rectangulaire 10 sur le châssis 2 via les charnières, les butoirs d'accostages 6 sur les caissons 4 du châssis formant butoirs 3, le circuit électro hydraulique ou pneumatique qui relie les vérins à la centrale hydraulique de commande.

Dans le but d'une installation aisée et rapide le procédé d'installation du pont adossé 1 sur le nez du quai comprend les étapes suivantes :
- fixation d'anneaux d'élingages 36 vissés respectivement sur les deux caissons 4 permettant la manutention ;
- manutention du pont 1 jusqu'au quai ;
- pose pour prise de mesures au niveau du retour 9 de la casquette 7 ;
- retrait du pont 1 ;
- création de la saignée sur le quai ;
- fixation par perçage et chevillage sur le quai ;
- finition par colle résine ;
- branchement électrique du coffret relié 13 à la centrale 12.

Le pont adossé selon l'invention permet plusieurs variantes d'utilisation et de s'adapter à des situations différentes en particulier avec les utilisations suivantes :
- Utilisation du pont adossé 1 en position intermédiaire, figée à l'horizontale pour la plateforme lèvre rentrée qui recouvre la zone refuge 42 permettant à l'opérateur d'accéder sur la plateforme 10 pour ouvrir le rideau du camion. Un voyant signale ladite position figée. Ainsi l'opérateur sait qu'il peut circuler à pied sur la plateforme 1.
- Utilisation du pont adossé 1 en position basse flottante, voyant de signalisation éteint, lèvre 23 sortie en appui sur le plancher du véhicule pour s'adapter aux variations de hauteur typiquement l'affaissement provoqué par le poids du chariot élévateur au moment de son passage du pont au véhicule.
- Utilisation du pont adossé 1 selon l'une des revendications 1 à 5, en position repos, plateforme 10 relevée comme barrière antichute et refuge 42 au niveau du sol et au niveau du quai.

Le fonctionnement du pont adossé 1 est le suivant :
- Au repos, la plateforme 10 est en position relevée et forme avec sa tôle et ses jupes une barrière qui évite les chutes de personnes du bord du quai et peut également prévenir la chute du matériel de manutention, à savoir : transpalettes, chariots élévateurs et autres.
- A l'arrivée d'un camion par action de l'interrupteur et du bouton poussoir accès piéton, la plateforme est descendue à l'horizontale en position fixe.
- Le voyant accès piéton s'allume.
- Le manutentionnaire se déplace à pied sur la plateforme et ouvre le rideau du camion.
- Ensuite, le manutentionnaire ayant quitté la plate forme, la lèvre est sortie avec le bouton « sortie lèvre » 20 et la plateforme est mise en position flottante. La lèvre télescopique permet d'ajuster la longueur par rapport au camion. Quand le chariot élévateur embarque dans le camion, sous le poids, ce dernier s'affaisse. La position flottante de la plateforme lui permet de descendre à la nouvelle hauteur du camion et inversement.

Bien que l'invention ait été décrite en liaison avec des structures particulières, elle n'y est nullement limitée et on peut y apporter de nombreuses variantes comme par exemple remplacer le circuit hydraulique par un circuit pneumatique ou un circuit mixte oléopneumatique. Il est possible de rajouter des éléments supplémentaires comme des vérins ou des boutons-poussoirs. L'invention est définie par les revendications jointes.

### SIGNES DE REFERENCE

1. Pont adossé,
2. Châssis monobloc,
3. Butoirs intégrés,
4. Caissons latéraux,
5. Plastres,
6. Butoirs d'accostage,
7. Casquette,
8. Plaque de tôle,
9. Retour d'extrémité,
10. Plateforme,
11. Renforts en profilés pliés,
12. Centrale hydraulique,
13. Coffret électrique,
14. Disjoncteur,
15. Circuit de commande,
16. Fusible,
17. Interrupteur,
18. Bouton poussoir,
19. Bouton poussoir,
20. Bouton poussoir,
21. Profilé,
22. Profilé,
23. Livre télescopique,
24. Vérin central,
25. Fourreau,
26. Tige,
27. Vérins,
28. Vérins,
29. Jupe
30. Jupe
31. Système anti chute,
32. Espace,
33. Coup de poing,
34. Clapet,
35. Béquille,
36. Anneaux d'élingage,
37. Barrière amovible,
38. Fourreaux de pied de barrière,
39. Ressorts,
40. Lèvre basculante,
41. Taquets,
42. Zone refuge.

Les signes de référence insérés après les caractéristiques techniques mentionnées dans les revendications ont pour seul but de faciliter la compréhension de ces dernières et n'en limitent aucunement la portée.

## Revendications

1. Pont adossé (1) basculant sous l'effet de vérin(s) (24) électro hydraulique(s) ou pneumatique(s) comprenant au moins :
- une plateforme (10) en tôle typiquement en tôle rectangulaire larmée,
- des jupes latérales én tôle (29, 30),
- des renforts de plateforme en profilés pliés (11),
- une lèvre (40),
- un châssis monobloc (2) comprenant:
- sur la surface extérieure, des butoirs intégrés (3) disposés latéralement, un espace central formant refuge,
- sur la face intérieure tournée vers le quai une casquette en tôle (7) avec retour fixé dans une saignée du quai et ancré par des chevilles,
- à l'intérieur une centrale hydraulique embarquée de commandes de vérins ;
la plateforme (10) étant articulée sur le châssis (2), remontant sous l'effet pivotant d'un vérin (24) en position quasi verticale de barrière de quai anti chute et descendant en position de travail, flottante et/ou fixe, étant commandée par la centrale hydraulique (12).

2. Pont adossé (1) selon la revendication 1 dans lequel la lèvre (40), est télescopique dans un but d'ajustement de la longueur de sortie.

3. Pont adossé (1) selon la revendication 1 dans lequel la lèvre (40) est basculante, repliée en position intermédiaire et reposant sur des taquets permettant de supporter le poids d'un chariot élévateur dans les situations où la lèvre ne peut être posée sur un camion chargé jusqu'au bord.

4. Pont adossé (1) selon l'une des revendications précédentes dans lequel le châssis est un ensemble mécano-soudé monobloc qui comprend deux caissons latéraux (4) servant de support aux butoirs d'accostage (6) et de butoirs et servant de logement et protection de la centrale hydraulique (12), les caissons (4) étant reliés par un plastron (5) support de la casquette (7) et des charnières d'articulation de la plate forme (10).

5. Pont adossé (1) selon l'une des revendications précédentes dans lequel la casquette (7) comprend des perçages fraisés permettant de recevoir des chevilles à béton affleurantes.

6. Procédé d'installation d'un pont adossé (1) selon l'une des revendications précédentes, sur le nez du quai comprenant les étapes suivantes :
- fixation d'anneaux d'élingages (36) vissés respectivement sur les deux caissons (4) permettant la manutention ;
- manutention du pont (1) jusqu'au quai ;
- pose pour prise de mesures au niveau du retour (9) de la casquette (7) ;
- retrait du pont (1) ;
- création de la saignée sur le quai ;
- fixation par perçage et chevillage sur le quai ;
- finition par colle résine ;
- branchement électrique du coffret relié (13) à la centrale (12).

7. Procédé d'installation d'un pont adossé (1) selon la revendication précédente comprenant préalablement au transport et à la manutention une étape d'assemblage d'au moins les composants suivants, la plateforme rectangulaire (10) sur le châssis (2) via les charnières, les butoirs d'accostages (6) sur les caissons du châssis formant butoirs, le circuit électro hydraulique ou pneumatique qui relie les vérins à la centrale hydraulique de commande (12).

8. Utilisation d'un pont adossé (1) conforme à l'une des revendications 1, 2, 4 ou 5 en position intermédiaire, figée à l'horizontale pour la plateformè lèvre rentrée qui recouvre la zone refuge (42) permettant à l'opérateur d'accéder sur la plateforme pour ouvrir le rideau du camion, un voyant signalant ladite position figée.

9. Utilisation du pont adossé (1) selon l'une des revendications 1 à 5, avec un voyant de signalisation, en position basse flottante, voyant de signalisation éteint, lèvre (40) sortie en appui sur le plancher du véhicule pour s'adapter aux variations de hauteur typiquement l'affaissement provoqué par le poids du chariot élévateur au moment de son passage du pont au véhicule.

10. Utilisation du pont adossé (1) selon l'une des revendications 1 à 5, en position repos, plateforme (10) relevée comme barrière antichute et refuge au niveau du sol et au niveau du quai.

## Patentansprüche

1. Anbaubrücke (1), die unter der Wirkung eines oder mehrerer elektrohydraulischer oder pneumatischer Zylinder (24) gekippt wird, aufweisend mindestens:
- eine Plattform (10) aus Blech, typischerweise aus rechteckigem Riffelblech,
- Seitenschürzen aus Blech (29, 30),
- Plattformverstärkungen aus gekanteten Profilen (11),
- eine Lippe (40),
- einen einteiligen Rahmen (2), aufweisend:
- auf der Außenfläche seitlich angeordnete integrierte Puffer (3), einen zentralen Raum, der einen Sicherheitsraum bildet,
- auf der der Laderampe zugewandten Innenfläche eine Blechabdeckung (7) mit einer Verkleidung, die in einem Schlitz der Laderampe fixiert und durch Dübel verankert ist,
- im Inneren ein eingebautes Zylindersteuerungs-Hydraulikaggregat;
wobei die Plattform (10) an dem Rahmen (2) gelenkig angebracht ist, unter der Schwenkwirkung eines Zylinders (24) in eine fast vertikale Stellung einer Laderampen-Fallschutzbarriere angehoben und in eine schwebende und/oder feste Betriebsstellung abgesenkt wird, wobei sie von dem Hydraulikaggregat (12) angesteuert wird.

2. Anbaubrücke (1) nach Anspruch 1, wobei die Lippe (40) zwecks Einstellung der Überstandlänge ausziehbar ist.

3. Anbaubrücke (1) nach Anspruch 1, wobei die Lippe (40) kippbar ist, wobei sie in den Fällen, in denen die Lippe nicht auf einem bis zum Rand beladenen Lastwagen aufgesetzt werden kann, in eine Zwischenstellung zurückgezogen ist und auf Trägern ruht, die imstande sind, das Gewicht eines Hubwagens zu tragen.

4. Anbaubrücke (1) nach einem der vorhergehenden Ansprüche, wobei der Rahmen eine maschinengeschweißte einstückige Anordnung ist, die zwei seitliche Kästen (4) aufweist, welche als Träger für die Anfahrpuffer (6) und als Puffer sowie zur Aufnahme und zum Schutz des Hydraulikaggregats (12) dienen, wobei die Kästen (4) durch eine Frontplatte (5) verbunden sind, die die Abdeckung (7) und die Gelenkscharniere der Plattform (10) trägt.

5. Anbaubrücke (1) nach einem der vorhergehenden Ansprüche, wobei die Abdeckung (7) angesenkte Bohrungen zum Aufnehmen der bündigen Betondübel aufweist.

6. Verfahren zum Installieren einer Anbaubrücke (1) nach einem der vorhergehenden Ansprüche an der Kante der Laderampe, das die folgenden Schritte umfasst:
- Befestigung von Anschlagösen (36), die jeweils auf die beiden Kästen (4) aufgeschraubt werden, um eine Beförderung zu ermöglichen;
- Befördern der Brücke (1) bis zur Laderampe;
- Auflegen zum Maßnehmen in Höhe der Verkleidung (9) der Abdeckung (7);
- Entfernen der Brücke (1);
- Erzeugen des Schlitzes auf der Laderampe;
- Befestigung durch Bohren und Andübeln auf der Laderampe;
- Fertigstellung mit Harzkleber;
- elektrischer Anschluss des mit dem Aggregat (12) verbundenen (13) Anschlusskastens.

7. Verfahren zum Installieren einer Anbaubrücke (1) nach dem vorhergehenden Anspruch, das vor dem Transport und der Beförderung einen Schritt der Montage mindestens der folgenden Komponenten umfasst: der rechteckigen Plattform (10) auf dem Rahmen (2) über die Scharniere, der Anfahrpuffer (6) auf den pufferbildenden Kästen des Rahmens, der elektrohydraulischen oder pneumatischen Schaltung, die die Zylinder mit dem hydraulischen Steueraggregat (12) verbindet.

8. Verwendung einer Anbaubrücke (1) nach einem der Ansprüche 1, 2, 4 oder 5 in einer horizontal starren Zwischenstellung der Plattform mit eingezogener, die Sicherheitszone (42) bedeckender Lippe, was der Bedienperson den Zugang zur Plattform zum Öffnen des Lastwagenschürze erlaubt, wobei eine Kontrollleuchte die starre Stellung anzeigt.

9. Verwendung der Anbaubrücke (1) nach einem der Ansprüche 1 bis 5 mit einer Signalleuchte und mit in einer niedrigen Schwebestellung mit ausgeschalteter Signalleuchte und ausgefahrener Lippe (40), die auf dem Fahrzeugboden aufliegt, um sich an Höhenveränderungen, typischerweise ein durch das Gewicht des Hubwagens zum Zeitpunkt seiner Überführung von der Brücke zum Fahrzeug hervorgerufenes Absenken, anzupassen.

10. Verwendung der Anbaubrücke (1) nach einem der Ansprüche 1 bis 5 in einer Ruhestellung mit hochgeklappter Plattform (10) als Fallschutzbarriere und Sicherheitsraum auf Höhe des Bodens und der Laderampe.

## Claims

1. Leaning bridge (1) tilting under the effect of electro-hydraulic or pneumatic actuator(s) (24) comprising at least:
- a deck (10) made of metal plate, typically a rectangular tread plate embossed with a tear drop pattern
- metal plate side skirts (29, 30),
- deck reinforcements made of folded steel section (11),
- a lip (40),
- a monoblock frame (2) comprising:
- on the outer side, integrated bumpers (3) placed at the sides, a central space forming a refuge,
- on the inner side facing the dock a rear lip plate (7) with a return section fixed in a groove in the dock and fastened by anchors
- on the inside an embedded hydraulic power unit to control the actuators;
the deck (10) being hinged on the frame (2), rising under the pivoting effect of an actuator (24) to a virtually vertical position as a dock anti-fall barrier and lowering into the working position, floating or fixed, being controlled by the hydraulic power unit (12).

2. Leaning bridge (1) according to claim 1 in which the lip (40) is telescopic for the purpose of adjusting the length it extends.

3. Leaning bridge (1) according to claim 1 in which the lip (40) is a swing lip, folded back in the intermediate position and resting on lugs that are able to bear the weight of a forklift truck in situations where the lip cannot be rested on a lorry loaded up to the edge.

4. Leaning bridge (1) according to one of the preceding claims in which the frame is a mechanically welded monoblock structure comprising two lateral boxes (4) serving to support the docking bumpers (6) and as bumpers and serving as the housing and protection for the hydraulic power unit (12), the boxes (4) being connected to each other by a rear panel (5) on which are mounted the rear lip plate (7) and the deck (10) hinges.

5. Leaning bridge (1) according to one of the preceding claims in which the rear lip plate (7) contains countersunk holes ready to take flush concrete anchors.

6. Method for installing a leaning bridge (1) according to one of the preceding claims, on the edge of a dock, including the following steps:
- fixing of lifting eyes (6), screwed into the two boxes (4) respectively and enabling handling;
- handling of the bridge (1) to bring it to the dock;
- positioning so that measurements can be taken at the return section (9) of the rear lip plate (7);
- removal of the bridge (1);
- creation of the groove in the dock;
- fastening by drilling and anchoring onto the dock;
- finishing with resin glue
- electrical connection of the control box (13) connected to the hydraulic power unit (12).

7. Method for installing a leaning bridge (1) according to the preceding claim including, prior to transporting and handling, a stage consisting of assembling at least the following components:
the rectangular deck (10) onto the frame (2) by means of the hinges, the docking bumpers (6) onto the frame boxes forming bumpers, the electro-hydraulic or pneumatic circuit which connects the actuators to the hydraulic power unit (12).

8. Use of a leaning bridge (1) compliant with claims 1, 2, 4 or 5 in the intermediate position, fixed horizontally for the deck, the lip retracted, covering the refuge area (42) enabling the operator to access the deck to open the lorry's curtain, an indicator light indicating the said fixed position.

9. Use of the leaning bridge (1) according to any one of claims 1 to 5, with an indicator light, in the lowered floating position, with the indicator light off, the lip extended and resting on the vehicle floor to adapt to the variations in height, typically the dip caused by the weight of the forklift truck when it crosses from the bridge into the vehicle.

10. Use of the leaning bridge (1) according to any one of claims 1 to 5, in the resting position, with the deck (10) raised to serve as an anti-fall barrier and refuge on the ground and at dock level.
